# EUROPEAN PATENT SPECIFICATION

(11) **EP 4 138 472 B1**
(45) Date of publication and mention of the grant of the patent: **26.11.2025**
(21) Application number: 22190565.6
(22) Date of filing: 16.08.2022
(51) Int. Cl.: H04W 72/1263, H04W 88/08

(54) **METHODS TO REDUCE FRONTHAUL COMPLEXITY FOR SINGLE FREQUENCY NETWORK (SFN) IN AN OPEN RADIO ACCESS NETWORK (O-RAN)**
VERFAHREN ZUR VERRINGERUNG DER FRONTHAUL-KOMPLEXITÄT FÜR EINFREQUENZNETZWERK (SFN) IN EINEM OFFENEN FUNKZUGANGSNETZWERK (O-RAN)
PROCÉDÉS DE RÉDUCTION DE COMPLEXITÉ FRONTHAUL POUR RÉSEAU MONOFRÉQUENCE (SFN) DANS UN RÉSEAU D'ACCÈS RADIO OUVERT (O-RAN)

(30) Priority: 17.08.2021 IN 202121037266; 10.08.2022 US 202217884666
(43) Date of publication of application: 22.02.2023
(73) Proprietor: Mavenir Systems, Inc., Richardson, TX 75081 (US)
(72) Inventor: LOURDU RAJA, Charles Santhosam, 560048 Bangalore (IN); UNNIKRISHNAN, Brijesh, 560067 Bangalore (IN); KUMAR, Nithin, 560064 Bengaluru (IN)
(74) Representative: Studio Torta S.p.A.

(56) References cited:
- WO-A1-2016/128023
- WO-A1-2021/080383
- WO-A1-2021/112747

## Description

### BACKGROUND OF THE DISCLOSURE

### 1. Field of the Disclosure

The present disclosure relates to methods for operating Radio Access Networks (RANs), and relates more particularly to methods to optimize Single Frequency Network (SFN) or shared cell configuration in an open radio access network (O-RAN).

### 2. Description of the Related Art

Conventional RANs were built employing an integrated unit where the entire RAN was processed. Conventional RANs implement the protocol stack (e.g., Physical Layer (PHY), Media Access Control (MAC), Radio Link Control (RLC), Packet Data Convergence Control (PDCP) layers) at the base station (also referred to as the evolved node B (eNodeB or eNB) for 4G LTE or next generation node B (gNodeB or gNB) for 5G NR). In addition, conventional RANs use application-specific hardware for processing, which make the conventional RANs difficult to upgrade and evolve. As future networks evolve to have massive densification of networks to support increased capacity requirements, there is a growing need to reduce the capital costs (CAPEX) and operating costs (OPEX) of RAN deployment and make the solution scalable and easy to upgrade.

Cloud-based Radio Access Networks (CRANs) are networks where a significant portion of the RAN layer processing is performed at a baseband unit (BBU), located in the cloud on commercial off the shelf servers, while the radio frequency (RF) and real-time critical functions can be processed in the remote radio unit (RRU), also referred to as the radio unit (RU). The BBU can be split into two parts: centralized unit (CU) and distributed unit (DU). CUs are usually located in the cloud on commercial off the shelf servers, while DUs can be distributed. The BBU may also be virtualized, in which case it is also known as vBBU. Radio Frequency (RF) interface and real-time critical functions can be processed in the Radio Unit (RU), sometimes referred to as Remote Radio Unit (RRU).

The O-RAN architecture is a Cloud-based architecture specified by the O-RAN Alliance. The components of the O-RAN architecture include, e.g., the Service Management and Orchestrator (SMO) Framework, the Non-Real Time (Near-RT) Radio Intelligent Controller (RIC), the Near-Real Time (Near-RT) Radio Intelligent Controller (RIC), the O-RAN Centralized Unit (O-CU), the O-RAN Distributed Unit (O-DU), and the O-RAN Radio Unit (O-RU). The data between O-DU and O-RU are sent over the open fronthaul (FH) interface.

O-RAN-standard based packet networking fronthaul interface between O-DU and O-RU for 4G and NR 5G radio access technologies (RAT) has gained huge attention from wireless cellular communication industries, largely due to the fact that O-RAN specification allows interoperability and standardization of RAN components (e.g., O-DU and O-RU) by implementing a unified interconnection standard over packet-based transport interfaces such as eCPRI and ROE. This has enabled seamless integration of white-box hardware and open-source software elements from different component vendors for O-DUs and O-RUs.

O-RAN specification supports 4G and 5G NR radio access technologies (RAT)-based layer 1 functional split 7.2x (FS-7.2x), where frequency domain data IQ samples and related control, management and synchronization information are carried over the fronthaul (FH) interface. This has allowed 4G and NR base-station systems (eNB and gNB) to be designed and deployed more cost effectively and efficiently, thus reducing CAPEX and OPEX significantly.

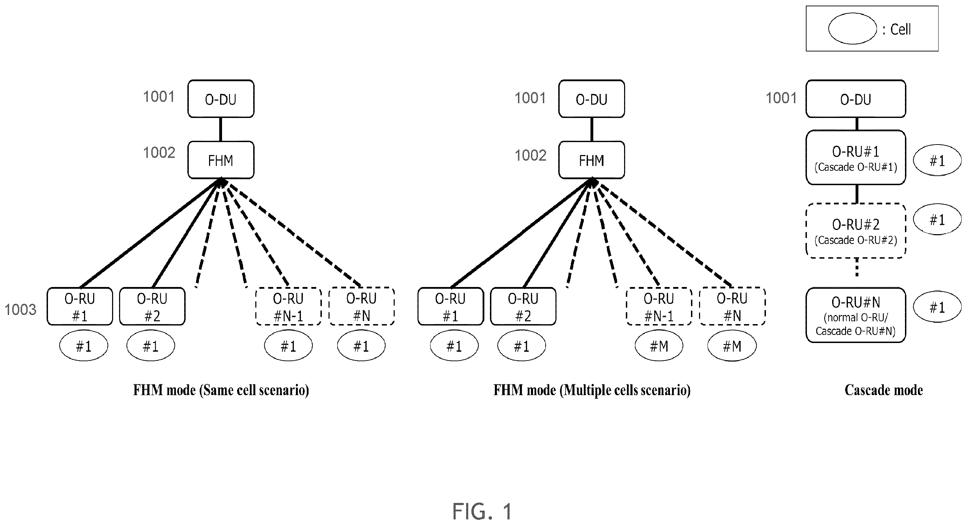

The current fronthaul O-RAN specifications for the control, user, and synchronization plane (CUS-plane) and management plane (M-plane) support the concept of single frequency network (in which several transmitters simultaneously send the same signal over the same frequency channel) via shared cell configuration. Based on the ORAN fronthaul specification (e.g., O-RAN Fronthaul Working Group Control, User and Synchronization Plane Specification - O-RAN.WG4.CUS.0-v06.00), two configurations are supported, as shown in FIG. 1.

In a first mode shown in FIG. 1, i.e., Fronthaul Multiplexer (FHM) mode, shared cell is realized by FHM 1002 and several O-RUs 1003. The left-most configuration shown in FIG. 1 shows the O-RUs in a single cell (cell #1), while the configuration at the center of FIG. 1 shows the O-RUs in multiple cells (cells #1 - #M). In this case, FHM 1002 is placed between the O-DU 1001 and multiple O-RUs 1003. FHM 1002 is modelled as an O-RU with LLS Fronthaul support (same as normal O-RU) and copy and/or combine functionality support (additional to normal O-RU), but without radio transmission/reception capability. For the copy and/or combine functionality, FHM 1002 can support selective transmission and reception function.

In a second mode shown in FIG. 1, i.e., Cascade mode, shared cell is realized by several O-RUs 1003 cascaded in chain. In this case, one or more O-RU(s) are inserted between the O-DU 1001 and the last O-RU (O-RU #N in FIG. 1) in the cascaded chain. The O-RUs in the cascaded chain, except for the last O-RU (O-RU #N in FIG. 1), support copy and/or combine functionality. The O-RUs which support the copy and/or combine functionality are named "Cascade O-RU". Note that the last O-RU can also support the copy and/or combine functionality, although it is not used (i.e., not only normal O-RU but also Cascade O-RU can function as the last O-RU in the cascade chain).

SFNs such as the ones described above typically need an additional dedicated hardware in the form of a multiplexer (e.g., FHM). In current O-RAN specification and implementation, for FHM-based topology, all the RUs are terminating on the FHM as shown in FIG. 1. This also translates into higher fronthaul link usage between FHM and O-RUs (i.e., the bandwidth between O-RUs and FHM is fully utilized), since this interface carries In-phase/Quadrature (IQ) samples from all the configured O-RUs (even from the ones which are not visible to UE and are sending just noise). Presence of noise would contribute to degraded SNR, since FHM would be performing a blind combining of all uplink (UL) IQ data, and the FHM could go into overload state. In the downlink (DL), since data is replicated across all configured O-RUs, power consumption is directly proportional to the number of O-RUs, even though only one or two O-RUs might be visible to UE. Moreover, in DL, IQ samples will be transmitted to RUs which are probably not serving any UEs.

Patent document WO 2016/128023 A1 relates to a method, a remote radio head controller, a computer program and a computer program product for controlling remote radio head contribution by a plurality of remote radio heads.

Patent document WO 2021/112747 A1 relates, in general, to wireless communications and, more particularly, systems and methods for shared cell Transmit/Receive Point (TRP) selection and combining.

Patent document WO 2021/080383 A1 relates to a communication network, and to a method and a system for hierarchical decoding of one or more data packets in a cellular communication system.

However, the above-mentioned issues are not solved.

Therefore, there is a need for a solution which improves the network performance for FHM-based networks, e.g., by reducing fronthaul complexity for Single Frequency Network (SFN) and/or shared cell in O-RAN.

### SUMMARY OF THE DISCLOSURE

The present invention relates to a system and a method as defined in the annexed claims. An example embodiment of the method according to the present disclosure optimizes the network, e.g., based on power and/or SNR information, in such a manner as to transmit data only through the O-RUs which are actually serving the UE.

An example embodiment of the system and method according to the present disclosure terminates the O-RUs at O-DU instead of at the FHM or any multiplexer.

In an example embodiment of the system and method in which the O-RUs terminate at the O-DU, at least one of the copy functionality and the combining functionality is implemented at the O-DU instead of at the FHM.

In the system and method according to the invention, as claimed, uplink transmission bandwidth over eCPRI is optimized by instructing O-RUs to filter out the signals based on a specified threshold by the O-DU.

In an example embodiment of the system and method, O-RUs are configured to send the signals towards the O-DU based on a set threshold for SNR level or power level.

In an example embodiment of the system and method, not covered by the claims, based on the uplink receive signal pattern, O-DU controls the downlink transmission by transmitting the downlink signals for a given UE only through the O-RUs where the received uplink signals for the same UE was above the threshold.

In an example embodiment of the system and method, not covered by the claims, based on the uplink receive pattern, the O-DU controls the downlink for each of the O-RUs, e.g., downlink will not be scheduled for O-RUs whose uplink signal is reported as below threshold.

### BRIEF DESCRIPTION OF THE FIGURES

FIG. 1 shows example network architectures of single frequency network (SFN) for O-RAN according to a non-claimed embodiment.
FIG. 2 shows example network architectures of optimized SFN for O-RAN, according to the present invention, as claimed.
FIG. 3 illustrates an example signal flow diagram for O-RU start-up and capability exchange.

### DETAILED DESCRIPTION

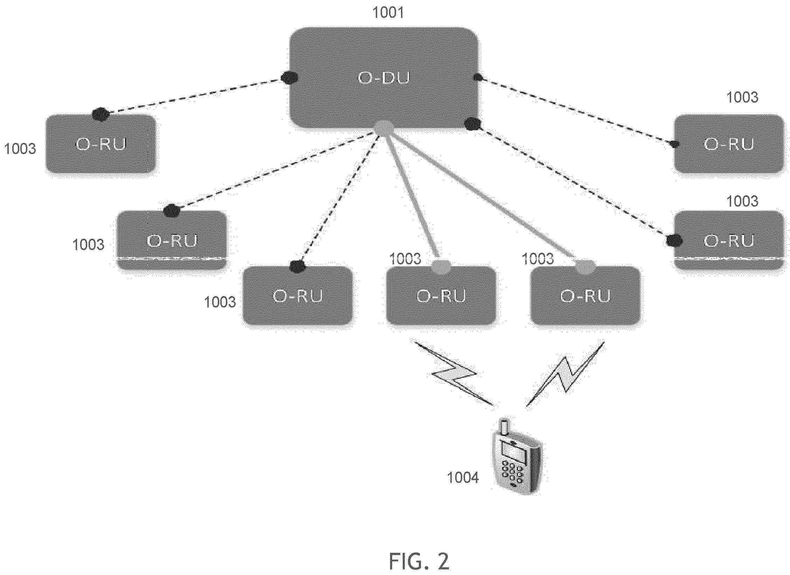

In an example embodiment of the system and method according to the present disclosure, the O-RUs 1003 terminate at the O-DU 1001 instead of at the FHM or any multiplexer, as shown in FIG. 2, which illustrates the operational connection among the user equipment (UE) 1004, O-RUs 1003 and O-DU 1001.

In an example embodiment of the system and method, at least one of the copy functionality and the combining functionality is implemented at the O-DU instead of at the FHM. In this example embodiment, the O-DU software takes care of copying and/or combining the signals from different physical Radios (O-RUs) in DL and UL, respectively, thereby eliminating the need for a multiplexer (e.g., FHM) between the O-DU and O-RUs. Thus, there is significant reduction of processing delay at FHM in the entire transmit/receive chain. Based on this example network configuration, which is one of the options that network operators can readily adopt, in certain cases, reduction in fiber delay can be achieved as well. This example network configuration can be used for indoor as well as outdoor requirements, e.g., based on the fiber requirements and topology. This can be achieved in any ORAN specified Sync profiles (e.g., C1/2/3/4).

In the system and method according to the invention, as claimed, uplink transmission bandwidth over eCPRI is optimized by instructing O-RUs to filter out the signals based on a specified threshold, e.g., specified by the O-DU. Generally, combining various uplink samples is compute intensive, so this usage can be optimized by instructing O-RUs to filter out the signals based on a threshold, e.g., specified by O-DU. O-RUs can be configured to send the signals towards the O-DU based on a set threshold for SNR level or power level. In an example embodiment, this threshold can be set for each Transmission Time Interval (TTI) and can be communicated over the c-plane interface defined by O-RAN. This can be applied to uplink channels (PRACH and PUSCH). The threshold can be changed every TTI, either per PRB basis or per UE basis. This can be indicated in a new parameter defined in the ORAN control plane protocol.

For the example embodiment in which the O-RUs filter out the signals based on a specified threshold, e.g., SNR level or power level, a new section extension can be used in conformance with O-RAN CUS specification [RAN Fronthaul Working Group Control, User and Synchronization Plane Specification - O-RAN.WG4.CUS.0-v06.00], as shown below:

| **extType** | **meaning** | **extLen** | **extension parameters** | **octets** | **meaning** |
|---|---|---|---|---|---|
| 0 | reserved | 1 (1 word) | Reserved | 1 | for future use |
| | | | reserved | 1 | for future use |
| 21 | SFN optimization | 1 | powerThreshold | 1 | Threshold to determine whether UL signal should be considered for combining in SFN or shared cell configuration |

An example section format could be implement as shown below:

| ef | extType = 0x15 | 1 | Octet N |
|---|---|---|---|
| extLen = 0x01 (1 word) | | 1 | N+1 |
| powerThreshold[7:0] | | 1 | N+2 |
| Reserved | | 1 | N+3 |

| | | | |
|---|---|---|---|
| ef: Indicates whether there are more section extensions included. extType: Defines the extension type (0x15 or 21 (decimal) for SFN optimization). extLen: Length of extension | | | |

In an alternative example embodiment, a static threshold is used over the management plane (M-Plane), which threshold is applied for each PRB in every TTI by the O-RU to filter the PRBs to be sent to O-DU. O-RU which has dropped the packets (according to the set threshold) shall indicate to O-DU that the packets are dropped. This parameter can be defined in ORAN M-plane specification [O-RAN Alliance Working Group 4, Management Plane Specification - O-RAN.WG4.MP.0-v06.00] under o-ran-uplane-conf.yang Module.
module: o-ran-uplane-conf
+--rw user-plane-configuration
+--rw powerThreshold decimal64 {mcap:OPTIMIZED-SFN-SUPPORTED} ?
OPTIMIZED-SFN-SUPPORTED will be defined as a feature capability to be reported by O-RU as part of its capability.d

For the above-described example embodiments, there are multiple options to determine the threshold levels. One example method is to statically determine the thresholds based on network (e.g., O-RAN and/or SFN) study and simulations. Another example method is to learn dynamically (e.g., using machine learning) and automatically optimize the threshold levels using machine learning algorithms. Another example method is to set the threshold based on the user, according to configured modulation schemes.

In a typical Distributed Antenna System (DAS) configuration, for most (e.g., 90%) of the time, not all O-RUs will have visibility to a UE. This means that remaining O-RUs which do not have visibility are sending noise to the O-DU. In this scenario, based on expected SNR levels and /or power levels for a given PRB (e.g., based on MCS used for that PRB), O-RU can be configured to not send the IQ samples for PRBs if the received signal power is lower than a threshold. This threshold could be sent over C-Plane for each PRB or a group of PRBs to the O-RU. The O-RU then selectively sends only the PRBs that have power (or SNR) above the threshold, which can lead to approximately 80% of IQ vectors in above examples being filtered out at the O-RU. This reduces the bandwidth (BW) needed on the FH interface from the O-RUs to the O-DU, as well as reducing the CPU usage required for uplink IQ combining function. In addition, this configuration (to not send the IQ samples for PRBs if the received signal power is lower than a threshold) also ensures that the combining process at the O-DU takes only the valid signals and not noise (which otherwise can lead to overload and effectively degrade the combined signal).

The above-described configuration of filtering the PRBs in UL by the O-RU can be done in both the cascade mode of O-RU configuration or in the FHM-based shared cell configuration in conformance with the ORAN specification. In addition, this filtering enables complete removal of the FHM element due to much lower volume of IQ samples arriving at the O-DU. FHM processing delay, which is part of overall fronthaul delay, will be absorbed in the O-DU, since the O-DU will handle additional processing of copy and combine. However, it should be noted that the number of streams to combine at the O-DU should be less than that of FHM due to selective transmission and reception.

In the example configuration depicted in FIG. 2, using the set threshold at O-RUs, only the two O-RUs which are visible to UE 1004 (as indicated by the signal symbols) would be transmitting uplink data as indicated by the solid lines connecting the O-RUs to the O-DU, and the O-DU needs to combine merely these signals. Although the above-described example embodiments apply the threshold parameters at the O-RU and the O-RU selectively applies the filtering, the threshold parameter application can also be implemented in any one of the configurations depicted in FIG. 1. In these cases, the threshold value can be applied at the FHM (or a multiplexer), and the FHM, based on the threshold value, can selectively do the combining, thus generating a signal with a better SNR. In this scenario of using one of the configurations depicted in FIG. 1, all the O-RUs in the configuration would send the uplink data, and the FHM will decide which samples to be selected for combining based on the threshold.

In another example embodiment, downlink transmission optimization is achieved based on the uplink received signal pattern. Based on the uplink receive signal pattern, the O-DU controls the downlink transmission by transmitting the downlink signals for a given UE only through the O-RUs for which the received uplink signals for the given UE was above the threshold. In an alternative example embodiment, a neighbor relation table can be built dynamically and used by the O-DU to determine to which O-RUs the data should be sent. It should be noted that current ORAN specification supports selective transmission and reception from O-RUs using beam forming techniques.

Optimizing the downlink transmission by transmitting the downlink signals for a given UE only through the O-RUs for which the received uplink signals for the given UE was above the threshold has several benefits. First, this arrangement reduces the fronthaul bandwidth requirement. Second, this arrangement significantly reduces the total power consumption since the downlink is not always transmitting at full power (power consumption in best case is close to single O-RU power in a conventional, non-optimized configuration, but the optimized configuration covers multiple O-RUs worth of cell coverage area). Third, most parts of the PRBs and Slots can become empty in all O-RUs. Fourth, significant energy saving and hence power consumption in best case is close to single radio power (but covering multiple Radios worth of cell coverage area). Fourth, substantial reduction of interference levels in downlink frequency spectrum is achieved as the transmission is performed in only very few O-RUs, thereby leaving the other O-RU coverage regions to be silent, which in turn reduces interference to adjacent cells. In the example embodiment shown in FIG. 2, the O-DU 1001 would be sending data only to O-RUs which have sent favorable uplink transmission (as indicated by the solid connecting lines).

In yet another example embodiment, based on the uplink receive pattern, O-DU shall control the downlink for each of the O-RUs. For example, downlink will not be scheduled for O-RUs whose uplink signal is reported as below a set threshold, thereby resulting in reduction in power consumption for O-RUs. This technique can be applied to either a small cell configuration (indoor deployment) or a macro deployment.

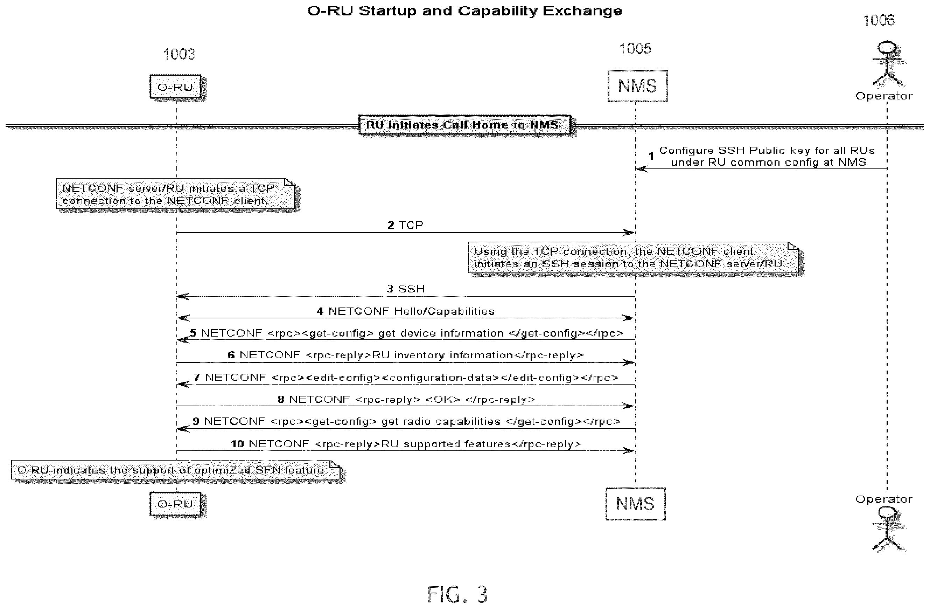

FIG. 3 illustrates example signal flow diagram for O-RU start-up and capability exchange with Network Management System (NMS). In the example illustrated in FIG. 3, the NMS 1005 can be implemented as, e.g., Service Management and Orchestration (SMO) module. Once the O-RU 1003 initiates a call home to the NMS 1005, the network operator 1006 configures Secure Shell (SSH) public key for all O-RUs under O-RU common configuration at the NMS 1005, as shown by the process arrow 1. Next, as shown by the process arrow 2, Network Configuration Protocol (NETCONF) server (which in this example can be part of the O-RU 1003) initiates a Transmission Control Protocol (TCP) connection to the NETCONF client, e.g., the NMS 1005 in this example. As shown by the process arrow 3, the NMS 1005 (serving as NETCONF client) initiates an SSH session by contacting the O-RU 1003 (serving as NETCONF server). As shown by the process arrow 4, client and server each send capabilities information (e.g., Uniform Resource Identifier (URI)) as part of exchanging "hello" messages. Next, a request-response protocol (RPC) is performed, as illustrated by process arrows 5 through 10. RPC is initiated by the client (the NMS 1005 in this case), which sends an <rpc> request message to the server (O-RU 1003 in this case) to execute a specified procedure with supplied parameters, and the server (O-RU 1003) sends a response to the client. As shown by the process arrow 5, an <rpc><get-config> request is sent by the NMS 1005 to get device information from the O-RU 1003. As shown by the process arrow 6, the O-RU 1003 sends an <rpc-reply> containing O-RU inventory information to the NMS 1005. As shown by the process arrow 7, the NMS 1005 sends an

<rpc> <edit-config> request containing configuration data to the O-RU 1003. As shown by the process arrow 8, the O-RU 1003 sends an <rpc-reply> message containing <OK> to the NMS 1005. As shown by the process arrow 9, the NMS 1005 sends an <rpc><get-config> request to get radio capabilities from the O-RU 1003. As shown by the process arrow 10, the O-RU 1003 sends an <rpc-reply> message containing O-RU-supported features to the NMS 1005.

Some of the advantages resulting from the example embodiments of the system and method according to the present disclosure include the following:
1) Because fewer O-RUs are transmitting or processing signals towards the O-DU in uplink at a given point of time, significant reduction of fronthaul bandwidth usage results.
2) Combining of signals at the O-DU is implemented using only the relevant signals since noise is already filtered out by the O-RU, which in turn results in the combined signal being more accurate in comparison to a combined signal resulting from signals received from all O-RUs (which contain noise in addition to relevant signals).
3) Energy saving is achieved at both O-RU and O-DU.
4) Flexibility to dynamically change the network configuration based on the network load is provided. For example, based on the signal strength across a multi-sector site, the multi-sector site could be dynamically configured to operate as SFN or DAS).
5) Role of the FHM is eliminated, thus reducing delay in both processing and transmission.
6) By having the O-DU control the downlink for each of the O-RUs, e.g., by not scheduling downlink for O-RUs whose uplink signal is reported as being below threshold, reduction in power consumption for O-RU is achieved (since the data is replicated in all scheduled O-RUs for downlink, the power consumption is directly proportional to the number of scheduled O-RUs even though each UE may see only one or two O-RUs).

### ACRONYMS & DEFINITIONS:

3GPP: 3rd Generation Partnership Project
CAPEX: Capital expenditures
CPRI: Common Public Radio Interface
CUS-plane: Control, user, and synchronization plane
DAS: Distributed antenna system
DL: Downlink
eCPRI: Enhanced Common Public Radio Interface
eNB: eNodeB (4G LTE base station)
FH: Fronthaul
FHM: Fronthaul Multiplexer
FS: Functional split
gNB: gNodeB (5G NR base station)
HW: Hardware
M-plane: Management plane
MCS: Modulation and coding scheme
NMS: Network management system
O-CU: O-RAN compliant Centralized Unit
O-DU: O-RAN compliant Distributed Unit
O-RAN: Open radio access network
O-RU: O-RAN compliant Radio Unit
OPEX: Operating expenses
PRACH: Physical random access channel
PRB: Physical resource block
PUSCH: Physical uplink shared channel
RACH: Random access channel
RAT: Radio access technology
RE: Resource element
RU: Radio unit
RoE: Radio over Ethernet
SFN: Single Frequency Network
SMO: Service Management and Orchestration
SNR: Signal to noise ratio
SyncE: Synchronous Ethernet
TCP: Transmission Control Protocol
TTI: Transmission time interval
UE: User Equipment
UL: Uplink
Channel: the contiguous frequency range between lower and upper frequency limits.
DL: Downlink: data flow towards the radiating antenna (generally on the LLS interface)
eCPRI: Enhanced CPRI (eCPRI) is a way of splitting up the baseband functions to reduce traffic strain on the fiber. They are then connected to baseband units in centralized locations. The connection between the technology is what we know as 'fronthaul'. eCPRI will be used to support 5G by enabling increased efficiency.
LLS: Lower Layer Split: logical interface between O-DU and O-RU when using a lower layer (intra-PHY based) functional split.
M-Plane: Management Plane: refers to non-real-time management operations between the O-DU and the O-RU
O-CU: O-RAN Control Unit - a logical node hosting PDCP, RRC, SDAP and other control functions
O-DU: O-RAN Distributed Unit: a logical node hosting RLC/MAC/High-PHY layers based on a lower layer functional split.
O-RU: O-RAN Radio Unit: a logical node hosting Low-PHY layer and RF processing based on a lower layer functional split. This is similar to 3GPP's "TRP" or "RRH" but more specific in including the Low-PHY layer (Fast Fourier Transform (FFT)/inverse FFT (iFFT), PRACH extraction).
RoE; Radio over ethernet. Technology to carry radio frames over ethernet.
S-Plane: Synchronization Plane: refers to traffic between the O-RU or O-DU to a synchronization controller which is generally an IEEE 1588 Grand Master (however, Grand Master functionality may be embedded in the O-DU).
U-Plane: User Plane: refers to IQ sample data transferred between O-DU and O-RU
UL: Uplink: data flow away from the radiating antenna (generally on the LLS interface)

## Claims

1. An Open Radio Access Network, O-RAN, system including a single frequency network, SFN, for handling signal transmissions involving a user equipment, UE, comprising:
a plurality of O-RAN radio units, O-RUs (1003) , configured to simultaneously send the same signal over the same frequency channel; and
an O-RAN distributed unit, O-DL (1001);
the system being **characterized in that**:
the O-DU (1001) is configured to instruct the O-RUs (1003) in the SFN to filter out
uplink, UL, signal based on a threshold for signal power level or a threshold for signal-to-noise ratio, SNR, level.

2. The system according to claim 1, wherein signal paths of the O-RUs toward the O-DU are linked directly to the O-DU.

3. The system according to claim 1, wherein the O-DU performs at least one of copying and combining the signals from different O-RUs in the UL.

4. The system according to claim 3, wherein said threshold for signal power level and said threshold for SNR level are specified by the O-DU.

5. The system according to claim 2, wherein the O-RUs are configured to only send physical resource blocks, PRBs, having one of i) power above said threshold for signal power level, or ii) SNR above said threshold for SNR level.

6. The system according to anyone of claims 1-5, wherein the threshold for signal power level and the threshold for SNR level are one of: i) statically determined based on at least one of the O-RAN parameters and the SFN parameters; ii) dynamically determined using machine learning; and iii) determined based on configured modulation scheme for the UE.

7. A method of operating an Open Radio Access Network, O-RAN, system including a single frequency network, SFN, for handling signal transmissions involving a user equipment, UE, the system comprising a plurality of O-RAN radio units, O-RUs (1003), and an O-RAN distributed unit, O-DU (1001), the method comprising:
the O-RUs (1003) simultaneously sending the same signal over the same frequency channel;
the method being **characterized in that**: the O-DU (1001) instructing the O-RUs (1003) in the SFN to filter out uplink, UL, signal based on a threshold for signal power level or a threshold for signal-to-noise ratio, SNR, level.

8. The method according to claim 7, wherein signal paths of the O-RUs toward the O-DU are linked directly to the O-DU.

9. The method according to claim 7, wherein the O-DU performs at least one of copying and combining the signals from different O-RUs in the UL.

10. The method according to claim 8, wherein the O-RUs are only sending physical resource blocks, PRBs, having one of i) power above said threshold for power level, or ii) SNR above said threshold for SNR level.

11. The method according to anyone of claims 7-10, wherein the one of the threshold for signal power level and the threshold for SNR level are one of: i) statically determined based on at least one of the O-RAN parameters and the SFN parameters; ii) dynamically determined using machine learning; and iii) determined based on configured modulation scheme for the UE.

## Patentansprüche

1. Open Radio Access Network, O-RAN, -System, das ein Einzelfrequenznetzwerk, SFN, zum Handhaben von Signalübertragungen beinhaltet, die ein Benutzergerät, UE, betreffen, umfassend:
eine Vielzahl von O-RAN-Funkeinheiten, O-RUs (1003), die konfiguriert sind, um gleichzeitig das gleiche Signal über den gleichen Frequenzkanal zu senden; und
eine verteilte O-RAN-Einheit, O-DU (1001);
wobei das System **dadurch gekennzeichnet ist, dass**:
die O-DU (1001) dazu konfiguriert ist, die O-RUs (1003) im SFN anzuweisen, das Uplink-, UL-, Signal auf Grundlage eines Schwellenwerts für den Signalleistungspegel oder eines Schwellenwerts für den Signal-Rausch-Verhältnis-, SNR-, Pegel herauszufiltern.

2. System nach Anspruch 1, wobei Signalpfade der O-RUs zu der O-DU direkt mit der O-DU verbunden sind.

3. System nach Anspruch 1, wobei die O-DU die Signale von verschiedenen O-RUs in der UL mindestens kopiert und/oder kombiniert.

4. System nach Anspruch 3, wobei der Schwellenwert für den Signalleistungspegel und der Schwellenwert für den SNR-Pegel von der O-DU vorgegeben werden.

5. System nach Anspruch 2, wobei die O-RUs so konfiguriert sind, dass sie nur physikalische Ressourcenblöcke, PRBs senden, die i) eine Leistung oberhalb des Schwellenwerts für den Signalleistungspegel und/oder ii) SNR oberhalb des Schwellenwerts für den SNR-Pegel aufweisen.

6. System nach einem der Ansprüche 1-5, wobei der Schwellenwert für den Signalleistungspegel und der Schwellenwert für den SNR-Pegel eines von Folgendem sind: i) statisch bestimmt auf Grundlage von mindestens den O-RAN-Parametern und/oder den SFN-Parametern; ii) dynamisch bestimmt unter Verwendung von maschinellem Lernen; und iii) bestimmt auf Grundlage eines konfigurierten Modulationsschemas für das UE.

7. Verfahren zum Betreiben eines Open Radio Access Network, O-RAN, -Systems, das ein Einzelfrequenznetzwerk, SFN, zum Handhaben von Signalübertragungen beinhaltet, die ein Benutzergerät, UE, betreffen, wobei das System eine Vielzahl von O-RAN-Funkeinheiten, O-RUs (1003), und eine verteilte O-RAN-Einheit, O-DU (1001), umfasst, wobei das Verfahren Folgendes umfasst:
die O-RUs (1003), die gleichzeitig das gleiche Signal über den gleichen Frequenzkanal senden;
wobei das Verfahren **dadurch gekennzeichnet ist, dass**:
wobei die O-DU (1001) die O-RUs (1003) im SFN anweist, das Uplink-, UL-, Signal auf Grundlage eines Schwellenwerts für den Signalleistungspegel oder eines Schwellenwerts für den Signal-Rausch-Verhältnis-, SNR-, Pegel herauszufiltern.

8. Verfahren nach Anspruch 7, wobei Signalpfade der O-RUs zu der O-DU direkt mit der O-DU verbunden sind.

9. Verfahren nach Anspruch 7, wobei die O-DU die Signale von verschiedenen O-RUs in der UL mindestens kopiert und/oder kombiniert.

10. Verfahren nach Anspruch 8, wobei die O-RUs nur physikalische Ressourcenblöcke, PRBs, senden, die i) eine Leistung oberhalb des Schwellenwerts für den Leistungspegel und/oder ii) SNR oberhalb des Schwellenwerts für den SNR-Pegel aufweisen.

11. Verfahren nach einem der Ansprüche 7-10, wobei der Schwellenwert für den Signalleistungspegel und/oder der Schwellenwert für den SNR-Pegel eines von Folgendem sind: i) statisch bestimmt auf Grundlage von mindestens den O-RAN-Parametern und/oder den SFN-Parametern; ii) dynamisch bestimmt unter Verwendung von maschinellem Lernen; und iii) bestimmt auf Grundlage eines konfigurierten Modulationsschemas für das UE.

## Revendications

1. Système de réseau d'accès radio ouvert, O-RAN, comprenant un réseau à fréquence unique, SFN, pour la gestion de transmissions de signal impliquant un équipement d'utilisateur, UE, comprenant :
une pluralité d'unités radio O-RAN, O-RU (1003), configurées pour envoyer simultanément le même signal sur le même canal de fréquence ; et
une unité distribuée O-RAN, O-DU (1001) ;
le système étant **caractérisé en ce que** :
l'unité O-DU (1001) est configurée pour donner instruction aux O-RU (1003) dans le SFN de filtrer un signal de liaison montante, UL, sur la base d'un seuil pour un niveau de puissance du signal ou d'un seuil pour un niveau de rapport signal/bruit, SNR.

2. Système selon la revendication 1, dans lequel des chemins de signaux des O-RU vers l'O-DU sont reliés directement à l'O-DU.

3. Système selon la revendication 1, dans lequel l'O-DU effectue au moins l'une parmi la copie et la combinaison des signaux provenant de différentes O-RU dans l'UL.

4. Système selon la revendication 3, dans lequel ledit seuil pour le niveau de puissance de signal et ledit seuil pour le niveau SNR sont spécifiés par l'O-DU.

5. Système selon la revendication 2, dans lequel les O-RU sont configurées pour n'envoyer que des blocs de ressources physiques, PRB, ayant l'un parmi : i) une puissance supérieure audit seuil pour le niveau de puissance de signal, ou ii) un SNR supérieur audit seuil pour le niveau SNR.

6. Système selon l'une quelconque des revendications 1 à 5, dans lequel le seuil pour le niveau de puissance de signal et le seuil pour le niveau SNR sont l'un parmi : i) déterminés de manière statique sur la base d'au moins un parmi les paramètres O-RAN et les paramètres SFN ; ii) déterminés de manière dynamique en utilisant un apprentissage automatique ; et iii) déterminés sur la base d'un schéma de modulation configuré pour l'UE.

7. Procédé d'exploitation d'un système de réseau d'accès radio ouvert, O-RAN, comprenant un réseau à fréquence unique, SFN, pour la gestion de transmissions de signal impliquant un équipement utilisateur, UE, le système comprenant une pluralité d'unités radio O-RAN, O-RU (1003), et une unité distribuée O-RAN, O-DU (1001), le procédé comprenant :
les O-RU (1003) envoyant simultanément le même signal sur le même canal de fréquence ;
le procédé étant **caractérisé en ce que** :
l'unité O-DU (1001) donne instruction aux O-RU (1003) dans le SFN de filtrer un signal de liaison montante, UL, sur la base d'un seuil pour un niveau de puissance du signal ou d'un seuil pour un niveau de rapport signal/bruit, SNR.

8. Procédé selon la revendication 7, dans lequel des chemins de signaux des O-RU vers l'O-DU sont reliés directement à l'O-DU.

9. Procédé selon la revendication 7, dans lequel l'O-DU effectue au moins l'une parmi la copie et la combinaison des signaux provenant de différentes O-RU dans l'UL.

10. Procédé selon la revendication 8, dans lequel les O-RU n'envoient que des blocs de ressources physiques, PRB, ayant l'un parmi : i) une puissance supérieure audit seuil pour le niveau de puissance, ou ii) un SNR supérieur audit seuil pour le niveau SNR.

11. Procédé selon l'une quelconque des revendications 7 à 10, dans lequel l'un parmi le seuil pour le niveau de puissance de signal et le seuil pour le niveau SNR est l'un parmi : i) déterminé de manière statique sur la base d'au moins un parmi les paramètres O-RAN et les paramètres SFN ; ii) déterminé de manière dynamique en utilisant un apprentissage automatique ; et iii) déterminé sur la base d'un schéma de modulation configuré pour l'UE.
